# DEMANDE DE BREVET EUROPEEN

(11) **EP 0 578 556 A1**
(43) Date de publication de la demande: **12.01.1994**
(21) Numéro de dépôt: 93401741.9
(22) Date de dépôt: 06.07.1993
(51) Int. Cl.: F16H 7/12

(54) **Tendeur de courroie pour moteur à combustion interne**

(30) Priorité: 08.07.1992 FR 9208476
(71) Demandeur: Société Anonyme dite: REGIE NATIONALE DES USINES RENAULT, F-92109 Boulogne Billancourt (FR)
(72) Inventeur: Joulin, Jean-Michel, F-92100 Boulogne-Billancourt (FR); Lalevee, Jean-Claude, F-95110 Sannois (FR)

(57) **Abrégé**

Tendeur de courroie comprenant un galet (4) monté en rotation et destiné à être appliqué contre une courroie (1) pour tendre cette dernière, et des moyens pour régler la position dudit galet par rapport à la courroie en vue du réglage de la tension de cette dernière, caractérisé par le fait que le galet (4) est monté en rotation autour de son axe (a4) sur un porte-galet (3) lui-même monté en rotation, autour d'un axe (a8) excentré (e) par rapport à l'axe de rotation du galet (4), sur un support (2) pouvant être réglé et bloqué en position, que le porte-galet (3) et le support (2) comportent des surfaces d'appui (17, 21) en regard l'une de l'autre dans le sens de rotation du porte-galet, surfaces entre lesquelles est intercalée une masse d'élastomère (22), de telle manière que sous l'effet de la tension de la courroie, le porte-galet ait tendance à tourner autour de son axe par rapport au support fixe et que lesdites d'appui aient tendance à se rapprocher l'une de l'autre, en comprimant en elles la masse d'élastomère.

Application : notamment aux courroies crantées de distribution pour moteur à combustion interne.

## Description

La présente invention se rapporte à un tendeur de courroie pour moteur à combustion interne, comprenant un galet monté en rotation, destiné à être appliqué contre une courroie pour tendre cette dernière, et des moyens pour régler la position de ce galet par rapport à la courroie en vue du réglage de la tension de la courroie.

Les principaux problèmes que posent les courroies synchrones, notamment les courroies crantées de distribution, utilisées sur les moteurs à combustion inteme concernent le maintien d'une tension sensiblement constante dans la courroie, quelles que soient les conditions de fonctionnement du moteur. En effet, une augmentation de la tension de la courroie a une répercussion directe sur la tenue en endurance de cette dernière. D'un autre côté, une diminution de la tension, notamment lorsqu'elle s'accompagne de fluctuations de tension dues aux irrégularités cycliques, augmente notablement le risque de saut de dents, risque qui doit absolument être éliminé sur les courroies synchrones telles que les courroies crantées de distribution. L'augmentation de la tension dans la courroie entraîne par ailleurs un accroissement du bruit de la courroie.

Or, la montée en température d'un moteur à explosion provoque une dilatation du moteur, d'où une augmentation de l'entraxe des différents arbres (villebrequin, arbre à cames, etc.) liés par la courroie de distribution. Par conséquent, sans dispositions particulières, la courroie de distribution subit des variations sensibles de sa tension selon que le moteur est froid ou chaud.

Les tendeurs de courroie utilisés à l'heure actuelle pour la tension des courroies crantées de distribution sur des moteurs à explosion sont de plusieurs types.

Le tendeur le plus simple est un tendeur mécanique rigide, sans compensation de variation de tension, dont on règle la position lors du montage du moteur sur chaîne et qu'on bloque ensuite dans sa position. Ce réglage qui représente un compromis (tenue en endurance, bruit, saut de dents) doit être effectué de façon très précise, pratiquement sans tolérances, ce qui implique un surcoût non négligeable au montage du moteur et surtout en après-vente. De plus, les réglages en après-vente sont très problématiques, faute de matériel, de connaissance, et d'informations pour un tel réglage précis.

Les tendeurs hydrauliques du type sans apport d'huile assurent une tension constante dans la courroie, mais risquent de poser des problèmes sur des moteurs à fortes vibrations dans la courroie (montée en température et explosion). De plus, le coût de ces tendeurs hydraulique est élevé.

Les tendeurs hydrauliques avec amortisseurs basés sur le principe des poussoirs hydrauliques sont d'un prix de revient trop élevé pour que leur utilisation généralisée puisse être envisagée.

Enfin, les tendeurs à ressort comportant un simple ressort amorti sans anti-retour implique une mise au point très laborieuse. De plus, la tenue en endurance est problématique.

La présente invention vise un tendeur de structure simple et de coût réduit, permettant un réglage avec des tolérances acceptables et assurant à la fois une diminution des variations de tension de la courroie, notamment dans le sens d'une limitation de la tension maximale dans la courroie, d'où une bonne tenue en endurance et un bruit réduit de la courroie, et un amortissement ou écrêtage des fluctuations de tension dans la courroie, dues aux irrégularités cycliques.

Le tendeur de courroie conforme à l'invention comprend un galet monté en rotation et destiné à être appliqué contre une courroie pour tendre cette dernière. Ce tendeur comprend, par ailleurs, des moyens pour régler la position dudit galet par rapport à la courroie en vue du réglage de la tension de la courroie. Selon l'invention, le galet est monté en rotation autour de son axe sur un porte-galet lui-même monté en rotation, autour d'un axe excentré par rapport à l'axe de rotation du galet, sur un support pouvant être réglé et bloqué dans sa position. Le porte-galet et le support comportent des parties d'appui en regard l'une de l'autre dans le sens de rotation du porte-galet, parties d'appui entre lesquelles est intercalée une masse d'élastomère. L'agencement est conçu pour que sous l'effet de la tension de la courroie, le porte-galet excentré ait tendance à tourner autour de son axe par rapport au support de telle manière que lesdites parties d'appui aient tendance à se rapprocher l'une de l'autre, en comprimant entre elles la masse élastomère.

Ainsi, tout en absorbant, par sa déformation, une partie des vibrations dues aux irrégularités cycliques, la masse d'élastomère, lorsque la tension dans la courroie augmente, subit une déformation plus importante, permettant ainsi un recul relatif du galet tendeur.

De préférence, la masse d'élastomère est constituée par un élastomère dont la dureté diminue avec l'augmentation de la température, de sorte que lorsque la température du moteur augmente, la température de la masse d' élastomère augmente également et sa dureté diminue, permettant ainsi pour un même effort un recul relatif plus important du galet tendeur.

Suivant un mode de réalisation avantageux, lesdites surfaces d'appui et ladite masse d'élastomère présentent des formes non complémentaires, par exemple une forme cylindrique associée à une forme carrée ou triangulaire, ce qui permet de choisir la progressivité de la déformation de la masse d'élastomère en fonction de la tension de la courroie.

En se référant aux dessins schématiques annexés, on va décrire ci-après plus en détail un mode de réalisation illustratif et non limitatif de l'objet de l'invention; sur les dessins:
la figure 1 est une vue de face d'un tendeur de courroie conforme à l'invention;
la figure 2 est une coupe suivant II-II de la figure 1;
les figures 3 et 4 sont des coupes suivant III-III et IV-IV de la figure 2.

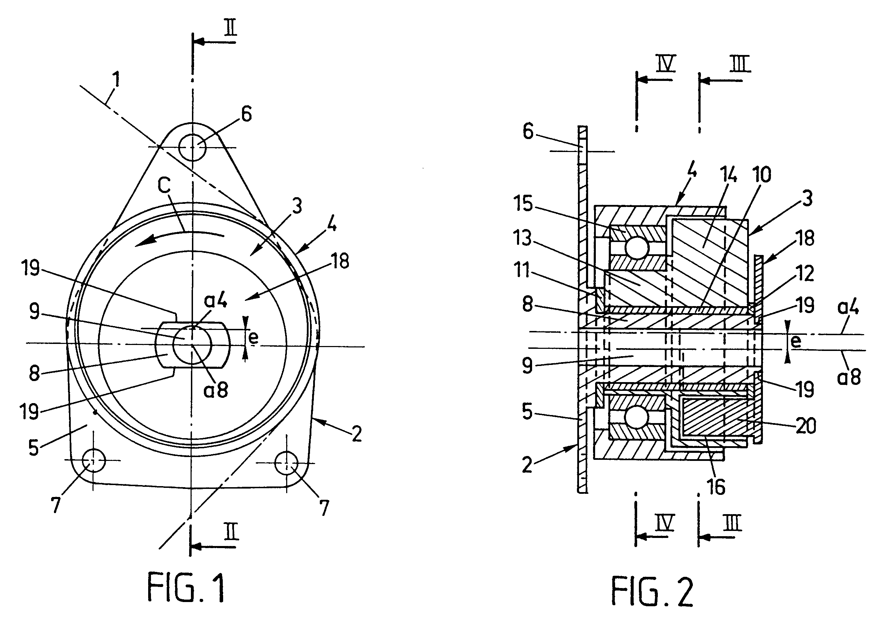

Le tendeur est illustré par les dessins, destinés à tendre une courroie 1 esquissée en partie en traits mixtes sur les figures 1, 3 et 4, de préférence une courroie crantée de moteur à explosion, se compose principalement d'un support 2, d'un porte-galet 3 et d'un galet tendeur 4.

Le support 2 comprend une platine 5 comportant un trou 6 pour son montage pivotant à l'aide d'un axe non représenté sur le bloc-cylindres ou la culasse du moteur, et deux trous 7 pour l'application d'une clé servant au réglage de la tension de la courroie 1 par pivotement du tendeur autour de l'axe traversant le trou 6 de la platine 5. Un axe 8 réalisé d'une seule pièce avec la platine 5 fait saillie sur l'une des faces de cette dernière. L'axe 8 dont l'axe géométrique est référencé a8 est traversé de part en part par un trou 9 servant à recevoir une vis de fixation non représentée par laquelle le tendeur peut être bloqué en position, de manière connue en soi, après réglage de la tension de la courroie 1.

Le porte-galet 3 est monté en rotation autour de l'axe a8 par un coussinet anti-friction 10 et deux rondelles de butée 11 et 12 sur l'axe 8 du support 2. Le porte-galet 3 dont la surface latérale extérieure est excentrée par rapport à l'axe 8 comporte une partie 13 de plus faible diamètre, du côté de la platine 5 du support 2, et une partie 14 de plus grand diamètre vers le côté opposé. Le galet 4 est monté par un roulement 15 en rotation autour de l'axe a4 décalé de la valeur e par rapport à l'axe a8, sur la partie 13 de plus faible diamètre du porte-galet 3.

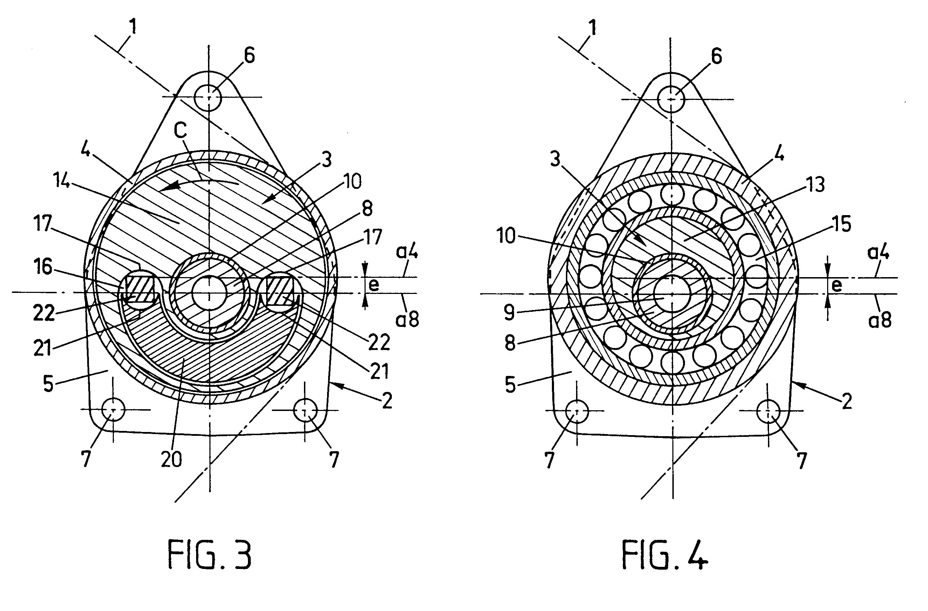

La partie 14 de plus grand diamètre du porte-galet 3 présente, comme le montrent les figures 2 et 3, un évidement 16 en forme de secteur de couronne circulaire ménagé dans la face d'extrémité libre de la partie 14 en étant centré sur l'axe a8. Les deux extrémités circonférentielles 17 de l'évidement 16 sont incurvées de façon concave, en l'occurence sous forme demi-cylindrique.

Un plateau 18 est rapporté sur l'extrémité libre de l'axe 8 dont la partie d'extrémité présente deux méplats opposés 19, le plateau 18 comportant un trou de forme correspondante. Le plateau 18 ainsi immobilisé en rotation sur la partie d'extrémité libre de l'axe 8 est rendu solidaire de ce dernier par la vis de fixation traversant le trou 9 de l'axe 8.

Le plateau 18 porte, sur sa face tournée vers le porte-galet 3, une saillie 20 en forme de secteur de couronne circulaire centrée sur l'axe a8, cette saillie 20 étant emboîtée avec du jeu dans l'évidement 16 de la partie 14 du porte-galet 3. Comme le montre la figure 3, les deux extrémités circonférentielles 21 de la saillie 20 sont creusées avec une forme demi-cylindrique, de telle manière que chaque extrémité 17 de l'évidement 16 et l'extrémité correspondante 21 de la saillie 20 se complètent sous la forme d'un trou de forme sensiblement cylindrique.

Dans chacun de ces deux trous cylindriques définis par les extrémités correspondantes 17 et 21 de l'évidement 16 et de la saillie 20 est inséré, comme le montre la figure 3, un bloc 22 en élastomère présentant une section non cylindrique, en l'occurrence une section carrée dans l'exemple représenté. Par conséquent, chaque bloc 22 ne se trouve en contact que par ses quatre arêtes avec les surfaces demi-cylindriques 17 et 21 du trou dans lequel il est inséré.

De préférence, chaque bloc 22 est réalisé en un élastomère dont la dureté diminue avec l'augmentation de la température, par exemple un caoutchouc nitrile-butadiène.

On va décrire ci-après le mode de fonctionnement du tendeur de courroie tel qu'illustré par les dessins.

Au moment de la pose de la courroie 1 sur le moteur, on applique à la courroie, à l'aide du tendeur, une tension prédéterminée, en faisant pivoter le tendeur, à l'aide d'une clé engagée dans les trous 7 de la platine 5, dans le sens contraire des aiguilles d'une montre autour de son axe de pivotement sur le moteur, défini par le trou 6, pour le serrer avec un couple prédéterminée contre la courroie 1. On bloque ensuite le tendeur dans cette position par serrage de la vis traversant le trou 9 de l'axe 8.

Du fait de l'excentration e entre l'axe a8 autour duquel le porte-galet 3 est monté en rotation sur le support 2 fixe, et l'axe de rotation a4 du galet 4 en contact avec la courroie 1, le porte-galet 3 excentré intercalé entre l'axe 8 et le galet 4 subit, par la tension de la courroie 1, un couple c autour de l'axe 8 dans le sens contraire aux aiguilles d'une montresur les figures 1 et 3. Sous l'effet de ce couple, le bloc d'élastomère 22 de gauche sur la figure 3 se trouve comprimé entre les deux surfaces d'appui 17 et 21, tandis que le bloc d'élastomère 22 de droite se trouve détendu.

Toute diminution de la tension de la courroie 1 se traduit ensuite par une avance relative du galet tendeur 4 contre la courroie 1 et toute augmentation de la tension par un recul relatif du galet tendeur 1 par rapport à la courroie 1.

Cela assure non seulement un écrêtage des fluctuations de tension susceptibles d'intervenir pendant le fonctionnement du moteur, en raison des irrégularités cycliques, mais encore à une atténuation de toutes les variations de tension intervenant dans la courroie.

De plus, dans le cas où les blocs d'élastomère 22 sont constitués par un élastomère dont la dureté diminue avec l'augmentation de la température, la malléabilité croissante du bloc 22 avec l'augmentation de la température se conjugue avec l'accroissement que la tension de la courroie 1 subit en raison de l'augmentation, avec la température, de l'entraxe des arbres lié par la courroie 1, du fait de la dilatation thermique du moteur, pour compenser encore davantage cet accroissement de la tension par un recul supplémentaire du galet tendeur 4 par rapport à la courroie 1.

Dans l'exemple représenté, le bloc d'élastomère 22 de droite sur la figure 3 n'intervient pas directement dans cette compensation des variations de tension de la courroie 1, mais sert uniquement de bloc anti-bruit et anti-recul dans le cas de fluctuations de tension.

Par un choix approprié de l'élastomère utilisé pour les blocs 22, ainsi que par le choix des formes des blocs 22 et des surfaces d'appui 17 et 21 pour ces blocs, il est possible d'adapter d'une manière optimale le tendeur conforme à l'invention au moteur équipé du tendeur de courroie.

Le choix de l'élastomère porte en premier lieu sur la dureté de l'élastomère ainsi que sur la variation de la dureté de cet élastomère avec la température.

En se qui concerne le choix des formes, il convient de noter d'une manière générale que les formes des surfaces d'appui 17, 21 et des blocs 22 ne sont avantageusement pas des formes complémentaires. Il est ainsi possible de combiner par exemple des formes circulaires avec des formes polygonales, par exemple quadrangulaires ou triangulaires, mais d'autres formes non complémentaires sont parfaitement concevables dans le cadre de l'invention, en fonction de la progressivité recherchée.

Il y a également lieu de remarquer, en ce qui concerne la structure générale du tendeur de courroie, que des modes de réalisation autres que celui représenté sont concevables dans le cadre de l'invention. Ainsi, le support 2 fixe qui, dans l'exemple illustré, se compose de deux parties comprenant l'une la platine 5 avec l'axe 8 et l'autre le plateau 18 avec la saillie 20, pourrait être réalisé différemment et en particulier d'une seule pièce.

De plus, au lieu d'avoir une structure symétrique (voir figure 3), l'évidement 16 du porte-galet 3 mobile et la saillie 20 du support 2 fixe pourraient également être de structure asymétrique dans la mesure où le bloc d'élastomère 22 de droite sur la figure 3 ne doit pas présenter nécessairement la même forme que le bloc 22 de gauche, ne remplissant pas la même fonction. Cependant, la structure symétrique telle qu'illustrée présente l'avantage que le même tendeur peut être utilisé indifféremment pour tendre une courroie dans un sens ou dans l'autre.

## Revendications

1. Tendeur de courroie comprenant un galet (4) monté en rotation et destiné à être appliqué contre une courroie (1) pour tendre cette dernière, et des moyens pour régler la position dudit galet par rapport à la courroie en vue du réglage de la tension de cette dernière, caractérisé par le fait que le galet (4) est monté en rotation autour de son axe (a4) sur un porte-galet (3) lui-même monté en rotation, autour d'un axe (a8) excentré (e) par rapport à l'axe de rotation du galet (4), sur un support (2) pouvant être réglé et bloqué en position, que le porte-galet (3) et le support (2) comportent des surfaces d'appui (17, 21) en regard l'une de l'autre dans le sens de rotation du porte-galet, surfaces entre lesquelles est intercalée une masse d'élastomère (22), de telle manière que sous l'effet de la tension de la courroie, le porte-galet ait tendance à tourner autour de son axe par rapport au support fixe et que lesdites d'appui aient tendance à se rapprocher l'une de l'autre, en comprimant entre elles la masse d'élastomère.

2. Tendeur suivant la revendication 1, caractérisé par le fait que la masse d'élastomère (22) est constituée d'un élastomère dont la dureté diminue avec l'augmentation de la température.

3. Tendeur suivant la revendication 1 ou 2, caractérisé par le fait que lesdites surfaces d'appui (27, 21) et ladite masse d'élastomère (22) présentent des formes non complémentaires.

4. Tendeur suivant la revendication 3, caractérisé par le fait que lesdites formes non complémentaires comprennent une forme circulaire et une forme polygonale.

5. Tendeur suivant la revendication 4, caractérisé par le fait que ladite forme polygonale comprend une forme quadrangulaire ou triangulaire.

6. Tendeur suivant l'une quelconque des revendications précédentes, caractérisé par le fait que le support (2) et le porte-galet (3) comprennent l'un évidement (16) et l'autre une saillie (20) pénétrant dans ledit évidement avec possibilité de mobilité angulaire autour de l'axe de rotation (a8) du porte-galet (3), lesdites surfaces d'appui (16, 21) étant prévues à au moins une extrémité circonférentielle dudit évidement et de ladite saillie.
